# EUROPEAN PATENT SPECIFICATION

(11) **EP 3 596 320 B1**
(45) Date of publication and mention of the grant of the patent: **01.05.2024**
(21) Application number: 18767149.0
(22) Date of filing: 27.02.2018
(51) Int. Cl.: F02B 23/06, F02F 3/26, F02F 3/24, F02B 3/06

(54) **A PISTON FOR AN INTERNAL COMBUSTION ENGINE**
KOLBEN FÜR EINEN VERBRENNUNGSMOTOR
PISTON POUR UN MOTEUR À COMBUSTION INTERNE

(30) Priority: 17.03.2017 SE 1750321
(43) Date of publication of application: 22.01.2020
(73) Proprietor: Scania CV AB, 151 87 Södertälje (SE)
(72) Inventor: DEMBINSKI, Henrik, 13562 Tyresö (SE)
(74) Representative: Scania CV AB
(86) International application number: PCT/SE2018/050185
(87) International publication number: WO 2018/169466

(56) References cited:
- WO-A1-2011/101154
- WO-A1-2012/010274
- CN-U- 202 031 718
- JP-A- S60 224 920
- JP-A- 2012 057 566
- JP-A- 2012 057 566
- JP-A- 2013 177 844
- JP-A- 2013 177 844
- US-A- 4 281 629
- US-A1- 2009 095 251
- US-A1- 2009 095 251
- US-A1- 2013 047 950

## Description

### TECHNICAL FIELD OF THE INVENTION

The present invention relates to a piston for an internal combustion engine according to the preamble of claim 1 and to an internal combustion engine comprising at least one cylinder with such a piston. It also relates to a motor vehicle comprising an internal combustion engine and to a method for creating a swirl motion in a combustion chamber of a cylinder in an internal combustion engine.

While the piston is primarily discussed with respect to diesel engines, it is to be understood that the piston may be used in any kind of internal combustion engine in which fuel or other fluids is/are directly injected into a combustion chamber, for example by means of injection of fuel followed by fuel ignition to provide piston movement. The piston may e.g. be used in two-stroke and four-stroke engines such as Otto engines, homogeneous charge compression ignition (HCCI) engines, and reactivity controlled compression ignition (RCCI) engines.

The internal combustion engine may also be a stationary internal combustion engine used in e.g. a pump or an electric generator.

### BACKGROUND AND PRIOR ART

Internal combustion engines such as diesel engines, also known as compression-ignition engines, and Otto engines, or spark-ignition engines, are commonly used in different types of motor vehicles, such as trucks and buses, cars, vessels, etc. Internal combustion engines are also used in many industrial applications.

Internal combustion engines, hereinafter also referred to as engines, may be driven by a plurality of different types of fuel, such as diesel, petrol, ethanol, gaseous fuel, and biofuel. The engines have a number of cylinders in which a reciprocating piston is provided. In an upper end of the piston, a piston bowl is provided. Together with an upper part of the cylinder and a cylinder head, the piston bowl forms a combustion chamber in which fuel is injected and combusted. The piston bowl is designed to contribute to mixing of air and fuel and to create a flow pattern influencing combustion and emission formation within the combustion chamber.

In a diesel engine, the fuel is normally injected during a powerstroke of the piston. The fuel is ignited by the compression heat and combusted almost immediately following injection. Air and fuel must therefore be mixed in a very short time, and it is desirable to ensure that the mixing is efficient and that the fuel becomes well-distributed within the combustion chamber so as to achieve a complete combustion. During the combustion, large amounts of soot are created due to the lack of oxygen in the non-pre-mixed diesel flame. The time between end of injection and exhaust valve opening is thereby critical to oxidise remaining soot particles in the cylinder. Four important parameters control the soot oxidation during this so called post-oxidation phase, namely time, temperature, oxygen and turbulence. The amount of soot particles present in the exhaust gases can thereby be minimized by controlling those parameters.

Increasingly stringent emission regulations, relating primarily to soot and nitrogen oxide (NOx) emissions, make it necessary to aim at further improving the emission control of internal combustion engines. However, more efficient emission control often require more complex and energy demanding aftertreatment and combustion systems, contributing to an increased fuel consumption. For example, a swirl motion may be created to form turbulence in the combustion chamber and efficiently mix fuel with air. The swirl motion is a large scale swirling motion around the axis of the cylinder, which is typically created during the intake stroke of the piston by the intake ports. The swirl motion improves the combustion conditions and increases the turbulence in the post-oxidation phase, thereby reducing the emission levels. However, the creation of swirl motion during the intake stroke is energy demanding and also increases heat transfer to the walls of the combustion chamber during the subsequent compression stroke. Thus, the creation of swirl motion by intake ports during the intake stroke generally reduces the efficiency of the engine. On the other hand, if the intake ports are designed not to create swirl, the soot emission levels may increase and thereby the demands on e.g. higher injection pressure or diesel particulate filters (DPF) provided downstream of the engine. Such higher injection pressures and filters generally increase production costs and fuel consumption.

There are known solutions for improving the mixture of air/fuel by modification of the piston bowl. For example, FR2898638 discloses a piston for an internal combustion engine, having a piston bowl in which a propeller-like bottom structure is provided. The bottom structure creates a swirl motion in the combustion chamber upon injection of fuel. However, there is a risk that fuel gets obstructed within cavities in the bottom structure, thus leading to insufficient mixing of air and fuel. Soot and hydrocarbons (HC) may thereby be created and increase the emission levels.

US2011/0253095 discloses a piston for an internal combustion engine, having a piston bowl in which a plurality of protrusions are provided, protruding from a side wall of the piston bowl. Fuel is injected into the combustion chamber and is redirected upon impacting with the protrusions such that a rotational motion may be induced.

Other examples of piston bowls having protrusions for influencing the flow of injected fuel are shown in JP 2013 177 844 A, JP 2012 057 566 A and US 2009/0095251 A1.

However, there is a need for a further improved piston that enables a combination of efficient combustion, a limited heat transfer to the walls of the combustion chamber, and reduced emission levels.

### SUMMARY OF THE INVENTION

It is a first objective of the present invention to provide a piston for an internal combustion engine which has a piston bowl configured to improve the efficiency of the combustion and post-oxidation phase, to reduce emission levels and to enable reduction of heat transfer to the walls of the combustion chamber. A second objective is to provide an internal combustion engine with an improved efficiency and reduced emission levels, thus reducing the need for extremely high injection pressures, diesel particulate filters and similar. A third objective is to provide an in at least some aspect improved and less energy consuming method for creating a swirl motion in a combustion chamber that survives into the post-oxidation phase.

At least the second objective is achieved by means of an internal combustion engine as defined by independent claim 1.

The piston of the herein described internal combustion engine has a piston bowl configured to deflect a portion of the fluid spray such that a swirl motion in the piston bowl is created and the mixing of air and fuel is improved. The swirl motion may hereby be induced during injection of e.g. fuel into the combustion chamber, and the swirl motion will survive into the post-oxidation phase of the combustion. The swirl motion may be created independently of the design of the intake ports. Thus, the energy required to create the swirl motion may be reduced. Moreover, heat transfer to the walls of the combustion chamber may be reduced during the compression stroke of the cylinder when swirl is not created during the intake stroke. The improved mixing of fuel and air also leads to lower emission levels including less soot particles, and may thereby reduce the need for expensive and energy demanding increased injection pressures and/or diesel particulate filters. Moreover, the angularly spaced protrusions, which may be identical, delimit the flame and reduce its size, thereby delimiting the surface area of the flame which is exposed to unburned oxygen and nitrogen. Since NOx gases are primarily created at the surface of the flame, the smaller flame results in reduced levels of NOx emissions. The proposed piston is thereby useful for improving energy efficiency and reducing both soot and NOx emission levels of an internal combustion engine.

The configuration with the annular ridge located below the protrusions makes it possible to, upon injection, direct the fluid spray such that the fluid spray, or, in the case where the fluid spray is a fuel spray which is ignited upon injection, the flame, may be split on the annular ridge. The upper flow portion of the fluid spray/flame is deflected toward the concave surface portion of the above protrusion, and the lower flow portion of the fluid spray/flame may be deflected into an annular channel delimited by the annular bottom and the annular lower side wall portion. The upper flow portion of the fluid spray/flame, which is deflected by the concave surface portion, may be deflected toward a position above the annular ridge, so that a swirl motion is induced in an upper part of the combustion chamber. This may further improve the mixing of fuel and air due to velocity gradients.

During the post oxidation phase, the large scale swirl created in the combustion chamber may be fractured into small scale turbulence leading to accelerated soot oxidation and thereby lower soot emissions. The fracture of the large scale swirling motion to small scale turbulence is possible thanks to the velocity differences in the piston bowl, created by the large scale swirl motion during the combustion phase.

Since the swirl motion may with the proposed piston be created upon injection of fuel, the rotational speed of the fuel/air mixture becomes proportional to the fuel injection pressure. Thus, the swirl motion scales with the fuel injection pressure and is thereby adapted to the operating conditions of the internal combustion engine.

The fuel spray may typically be ignited a very short time after injection into the combustion chamber, i.e. after an ignition delay. Upon ignition, a flame is formed. However, the injected fluid spray does not necessarily have to be a fuel spray, but may also be a mixture of fuel/gas or a liquid spray which is injected primarily to create a swirl motion, either during the compression stroke or during the power stroke of the piston. For example, injection of fluid in the form of water may reduce the combustion temperature and thereby reduce NOx emissions. In e.g. an Otto engine, a fuel/air mixture may be injected during the compression stroke such that a swirl motion is created before ignition of the fuel/air mixture using a spark plug. The fluid spray may also be injected during the power stroke to improve the conditions during the post-oxidation phase.

Of course, it is possible to combine the piston of the internal combustion engine with intake ports configured to create a swirl motion during the intake stroke, in order to further increase the turbulence in the combustion chamber. The swirl created by the intake ports can either be in the same direction as the fluid injection induced swirl, or be in the form of a counterflow.

According to one embodiment, the concave surface portion of each of the angularly spaced protrusions is configured to face radially inward. Fuel can thereby be efficiently redirected to create a swirl motion.

According to one embodiment, the concave surface portion of each of the angularly spaced protrusions is configured so that at least a part of the upper flow portion is redirected toward a position above the annular ridge. The swirl motion may thereby be induced in an upper part of the combustion chamber located above the annular ridge. If the lower flow portion is deflected from the annular ridge toward an annular channel discussed above at the bottom of the piston bowl, the mixing of fuel and air is further improved.

Each of the angularly spaced protrusions has an innermost point located at a similar radial distance from the central axis as the annular ridge. By "innermost point" is herein intended the point closest to the central axis, i.e. the point that protrudes the most from the annular upper side wall portion. By "similar radial distance" is herein intended a distance that does not differ by more than 10% from the radial distance between an innermost point of the annular ridge to the central axis. Thereby, the ignition delay may be optimized for reduction of both NOx gases and soot particles.

According to one embodiment, the annular lower side wall portion is in the form of a concave surface free from protrusions. This reduces the risk that fuel gets obstructed in the lower part of the piston bowl and improves the conditions for mixing of fuel/air in the lower part of the combustion chamber with the rotating fuel/air within the upper part of the combustion chamber .

According to one embodiment, each of the angularly spaced protrusions further comprises a convex surface portion located opposite the concave surface portion. The upper flow portion may thereby be split on an innermost edge of the protrusion and while one part of the upper flow portion follows the concave surface portion, another part follows the convex surface portion, both parts contributing to the creation of the swirl motion.

According to one embodiment, the central bottom portion has a highest point located on the central axis, from which highest point the central bottom portion slopes downward toward the annular bottom portion. This configuration increases the compression achieved in the combustion chamber during the compression stroke. Furthermore, air is pressed into the periphery of the combustion chamber where combustion takes place. The central bottom portion preferably has a conical or an essentially conical shape. The highest point of the central portion may be located at an axial level on or above an axial level of the annular ridge.

As previously disclosed, at least the second objective is achieved by means of an internal combustion engine comprising at least one cylinder with the proposed piston. Advantages and advantageous features of such a combustion engine appear from the above description of the proposed piston. Of course, the internal combustion engine may comprise a plurality of cylinders having the proposed piston. The internal combustion engine may be adapted for use within a motor vehicle or within a stationary machine such as a pump or an electrical generator.

The internal combustion engine further comprises an injector configured to inject and direct a fluid spray toward a plurality of target positions, wherein each target position is located below one of said angularly spaced protrusions. Each target position is associated with one of the angularly spaced protrusions and is located directly below the associated protrusion. The internal combustion engine is thereby configured to create a swirl motion upon injection of fluid in the form of e.g. fuel, air, water or mixtures thereof. Preferably, the injector may be positioned on the central axis.

The invention also relates to a motor vehicle comprising the proposed internal combustion engine. The motor vehicle may be a heavy motor vehicle such as a truck or a bus, but it may also be e.g. a passenger car or another motor vehicle.

At least the third objective is achieved by means of a method for creating a swirl motion in a combustion chamber of a cylinder in the proposed internal combustion engine, comprising:
- providing a flow of air into the combustion chamber during an intake stroke of the piston,
- during or after a compression stroke of the piston, injecting a fluid spray toward the plurality of target positions, so that the fluid spray is at each one of the target positions split by the annular ridge into an upper flow portion and a lower flow portion, wherein the upper flow portion is deflected by the concave surface portion of the protrusion located above the target position so that a swirl motion is created in the combustion chamber.

Advantages of the method appear from the above description of the proposed piston of the combustion engine.

According to one embodiment, injecting a fluid spray comprises, following a compression stroke of the piston, injecting a fuel spray so that when the fuel spray is ignited and a flame is formed, at least an upper flow portion of the flame is deflected by the concave surface portion so that a swirl motion is created in the combustion chamber. This is applicable for diesel engines, in which the fuel spray is ignited almost immediately upon injection.

According to one embodiment, the flow of air into the combustion chamber is provided without creating a swirl motion. The swirl motion is thereby created entirely upon injection of fluid and the amount of energy required for creating the swirl motion is reduced. It is however also possible to combine creation of a swirl motion during the intake stroke with creation of a swirl motion upon injection of fluid, for further enhancing turbulence in the combustion chamber.

Further advantages as well as advantageous features of the present invention will appear from the following detailed description.

### BRIEF DESCRIPTION OF THE DRAWINGS

- Fig. 1: schematically shows an axial section of a cylinder of an internal combustion engine according to an embodiment,
- Fig. 2: is a perspective view of a piston according to a first embodiment,
- Fig. 3: is an upper end view of the piston in fig. 2,
- Fig. 4: is a section taken along the line IV-IV in fig. 2,
- Fig. 5: is a section taken along the line V-V in fig. 2,
- Fig. 6: is a perspective view of a piston according to a second embodiment,
- Fig. 7: is an upper end view of the piston in fig. 6,
- Fig. 8: is a section taken along the line VIII-VIII in fig. 6,
- Fig. 9: is a section taken along the line IX-IX in fig. 6, and
- Fig. 10: is a cross section taken along the line X-X in fig. 9 shown together with a diagram showing rotational speed within a combustion chamber as a function of distance from a central axis.

### DETAILED DESCRIPTION

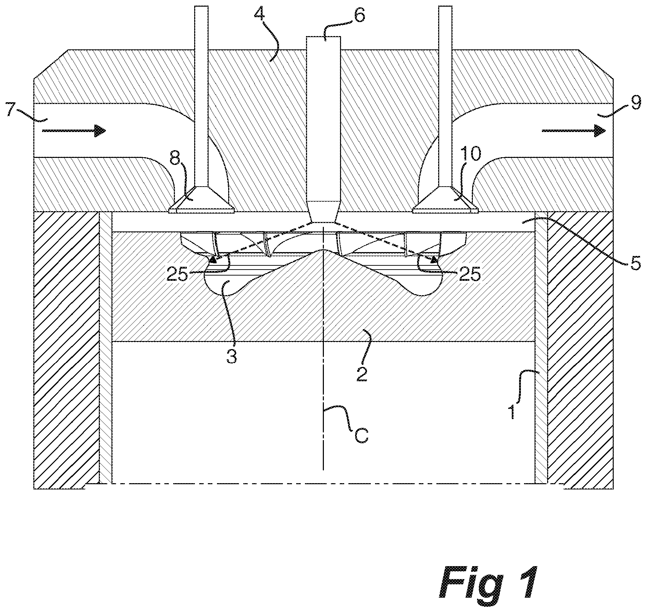

Fig. 1 shows a section taken along a central axis C of a cylinder 1 of an internal combustion engine in the form of a diesel engine according to an embodiment. In the cylinder 1, a piston 2 configured to reciprocate within the cylinder along the common central axis C is provided. A piston bowl 3 is formed in the piston 2, which together with internal walls of the cylinder 1 and an internal surface of a cylinder head 4 creates a combustion chamber 5. A fuel injector 6 is positioned on the central axis C above the piston bowl 3. An intake port 7 is provided in the cylinder head 4 for supply of air into the combustion chamber 5 via an intake valve 8. Furthermore, an exhaust port 9 is provided in the cylinder head 4 for evacuation of exhaust gases via an exhaust valve 10.

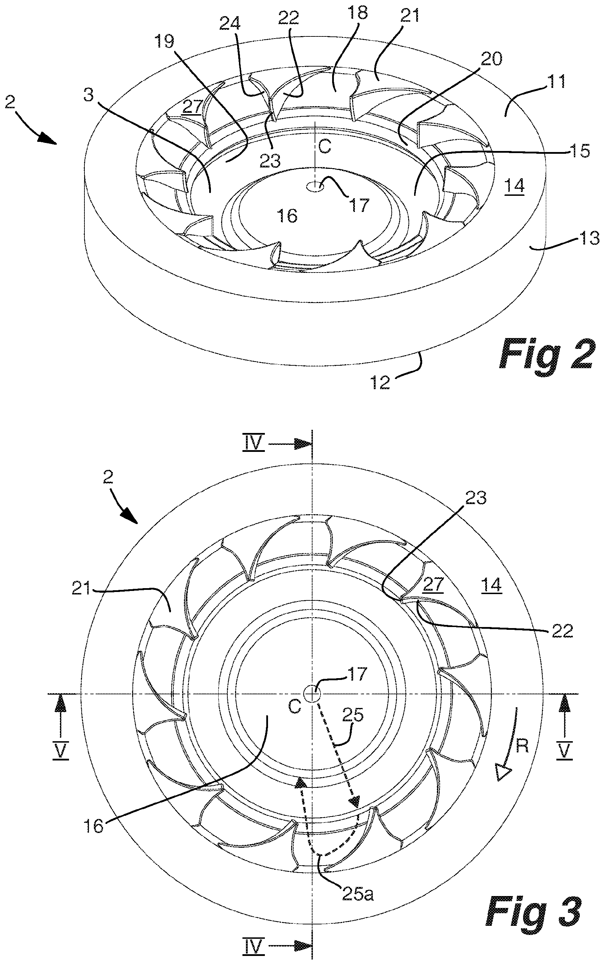

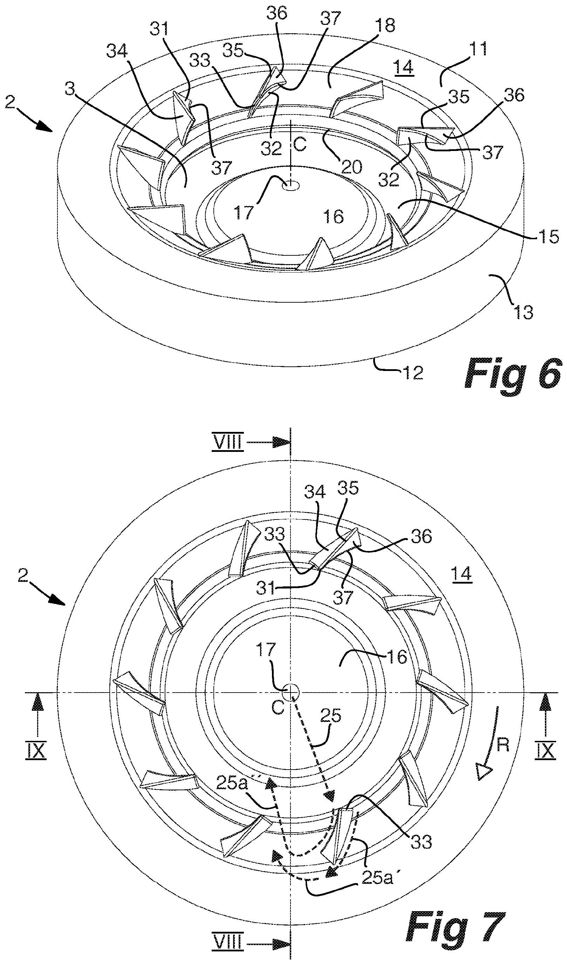

The piston 2 according to the embodiment shown in fig. 1 is shown in closer detail in figs. 2-5. A piston 2 according to a second embodiment is shown in figs. 6-10. Common elements of the piston 2 according to the first and the second embodiment will in the following be described using common reference numerals. The first embodiment of the piston 2 is a comparative embodiment, whereas the second embodiment of the piston 2 is within the claimed scope.

The piston 2 according to both embodiments has the basic shape of a right circular cylinder with an upper end 11 and a lower end 12, between which a central axis C and a peripheral envelope surface 13 extend. The upper end 11 comprises an annular top surface 14 defining an upper plane Pᵤ. The piston bowl 3 is recessed with respect to the upper plane Pᵤ defined by the top surface 14. An annular bottom portion 15 defines a lowest level of the piston bowl 3. Radially inside of the annular bottom portion 15, a central bottom portion 16 which is elevated with respect to the lowest level is provided. The central bottom portion 16 is cone shaped with a rounded top 17, which top 17 is recessed with respect to the upper plane Pᵤ. An annular upper side wall portion 18 extends downward and radially inward from the top surface 11. An annular lower side wall portion 19 extends upward from the annular bottom portion 15 toward the upper side wall portion 18. Between the upper side wall portion 18 and the lower side wall portion 19, an annular ridge 20 is formed, projecting toward the central axis C. Together, the annular bottom portion 15 and the lower side wall portion 19 delimit an annular channel 26 surrounding the central bottom portion 16.

The fuel injector 6 is configured for injecting fuel into the cylinder 1 as a fuel spray 25 so that the fuel is mixed with air compressed in the cylinder 1 to form a fuel/air mixture. The fuel/air mixture is after an ignition delay ignited by compression heat generated in the cylinder 1. The ignited part of the fuel spray 25 forms a flame. The fuel can be injected with different injection pressures, from low to very high pressures. The fuel injector 6 includes a plurality of small injection orifices (not shown), formed in the lower end of a nozzle assembly of the fuel injector 6 for permitting the high pressure fuel to flow from a nozzle cavity of the fuel injector 6 into the combustion chamber 5 with high pressure to induce thorough mixing of the fuel with the hot compressed air within the combustion chamber 5. It should be understood that the fuel injector 6 may be any type of fuel injector capable of injecting high pressure fuel through a plurality of injector orifices into the combustion chamber 5. Also, the fuel injector need not necessarily be positioned on the central axis C.

In other embodiments, in which the internal combustion engine is e.g. an Otto engine, the fuel injector may be configured to inject a mixture of fuel and air into the combustion chamber. The injector may also be configured to inject other fluids such as gases or liquids, e.g. water, which are not combusted but are primarily used to induce a swirl motion.

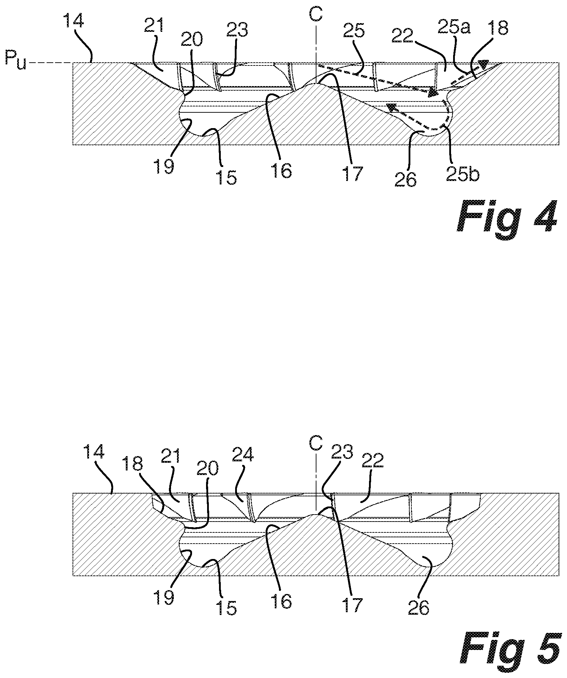

In the first embodiment shown in figs. 2-5, a plurality of identical and angularly spaced protrusions 21 protrude toward the central axis C from the upper side wall portion 18 above target positions located on the ridge 20. Each protrusion 21 is wedge shaped with a first concave surface portion 22, which in the radial direction extends from the upper side wall portion 18 to a curved innermost edge 23 of the protrusion 21, whose innermost point is located closest to the central axis C at approximately the same distance from the central axis C as the annular ridge 20. In the axial direction, the protrusion extends from the top surface 14 to the ridge 20. The first concave surface portion 22 is directed so that no part of the concave surface portion 22 is hidden behind any part of the protrusion 21 as seen from the central axis C. The first concave surface portion 22 has a curvature both as seen in an upper end view such as in fig. 3 and in a sectional view across the protrusion 21, such as shown in fig. 5. Each protrusion 21 further has a smaller second concave surface portion 24 located opposite the first concave surface portion 22 and a planar upper surface portion 27 at the level of the upper plane Pᵤ.

The injection orifices of the fuel injector 6 are arranged so that the fuel spray 25 is injected toward target positions on, above or below the annular ridge 20, which target positions are located below the first concave surface portions 22 of the protrusions 21. It should be noted that the piston 2 is moving along the central axis C as the fuel spray 25 is injected, and therefore the exact target positions in the axial direction will vary. The target position aimed for in the axial direction also depends on e.g. load and injection timing. As the ignited fuel spray 25, i.e. the flame, strikes the target positions, the flame is split on the annular ridge 20 into an upper flow portion 25a and a lower flow portion 25b. The upper flow portion 25a of the flame is deflected upward, toward the concave surface portion 22. The lower flow portion 25b of the flame is deflected downward, into the annular channel 26 and toward the central bottom portion 16. As the upper flow portion 25a impinges on the concave surface portion 22, it is deflected toward a position in an upper part of the combustion chamber 5, above the annular ridge 20, which position is angularly spaced from the concave surface portion 22 by which the flame was deflected. The deflected upper flow portions 25a of the flames thereby together induce a swirl motion in the upper part of the combustion chamber 5, i.e. a large scale rotation in the direction of rotation R around the central axis C. Between a lower part of the combustion chamber 5, below the annular ridge 20, and the upper part of the combustion chamber 5, turbulence may be created as the rotating flow of fuel/air mixture in the upper part of the combustion chamber 5 interacts with the fuel/air mixture in the lower part of the combustion chamber 5, which rotates with an axis of rotation perpendicular to or essentially perpendicular to the central axis C.

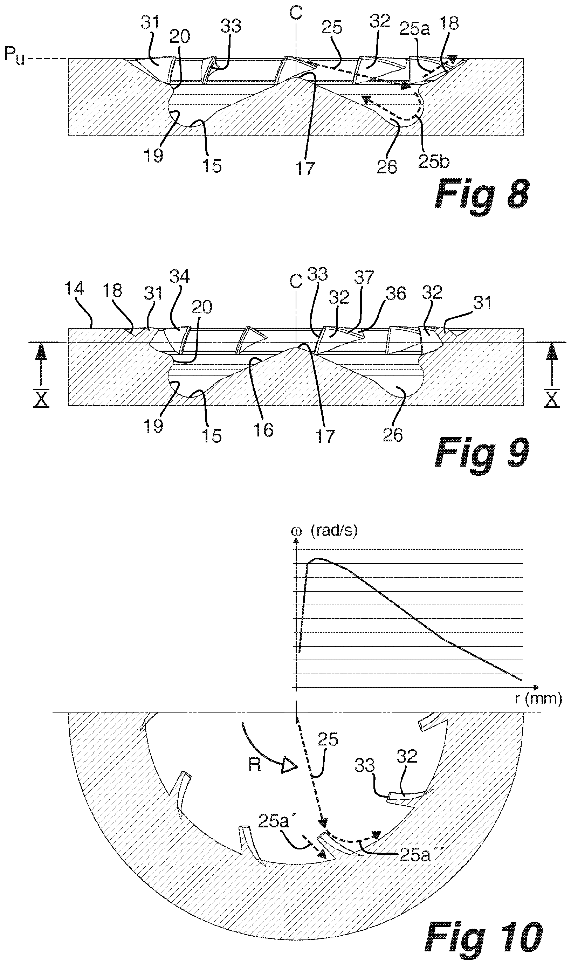

In the second embodiment shown in figs. 6-10, a plurality of mutually identical and angularly spaced protrusions 31 protrude toward the central axis C from the upper side wall portion 18 above target positions located on the ridge 20. The protrusions 31 are in the form of fins having a concave surface portion 32, which in the radial direction extends from the upper side wall portion 18 to a curved innermost edge 33 of the protrusion 31, whose innermost point is located at the level of the upper plane Pᵤ, closest to the central axis C at approximately the same distance from the central axis C as the annular ridge 20. In the axial direction, the protrusion extends from the top surface 14 to the ridge 20. The concave surface portion 32 is directed so that no part of the concave surface portion 32 is hidden behind any part of the protrusion 31 as seen from the central axis C. The concave surface portion 32 has a curvature both as seen in a transverse cross sectional view such as in fig. 10 and in an axial sectional view across the protrusion 31, such as shown in fig. 9. Each protrusion 31 further has a convex surface portion 34 located opposite the first concave surface portion 32, extending from the upper side wall portion 18 to the innermost edge 33. The protrusion 31 has an upper edge 35 extending in the upper plane Pᵤ. An inclined surface 36 extends from the upper edge 35 to a curved edge 37 defining a transition between the inclined surface 36 and the concave surface portion 32.

The injection orifices of the fuel injector 6 are in the second embodiment arranged so that fuel spray 25 is injected toward target positions on, below or above the annular ridge 20, which target positions are located below the protrusions 31, in the shown embodiment below the innermost edge 33. As the ignited fuel spray 25, i.e. the flame, strikes the target positions, the flame is split on the annular ridge 20 into an upper flow portion 25a and a lower flow portion 25b. The upper flow portion 25a of the flame is deflected upward, toward the concave surface portion 32. The lower flow portion 25b of the flame is deflected downward, into the annular channel 26 and toward the central bottom portion 16. As the upper flow portion 25a of the flame impinges on the innermost edge 33 of the protrusion 31, it is split into a first portion 25a' following the convex surface portion 34 and a second portion 25" following the concave surface portion 32. Both portions 25a', 25a" are deflected toward a position within the upper part of the combustion chamber 5 above the annular ridge 20, which position is angularly spaced from protrusion 31 on which the flame was deflected. The deflected upper flow portions of the flames thereby together induce a swirl motion in the direction of rotation R in the upper part of the combustion chamber 5. Between the lower part of the combustion chamber 5, below the annular ridge 20, and the upper part of the combustion chamber 5, turbulence may be created as the rotating flow of fuel/air mixture in the upper part of the combustion chamber 5 interacts with the fuel/air mixture in the lower part of the combustion chamber 5, which rotates with an axis of rotation perpendicular to or essentially perpendicular to the central axis C.

In the embodiment shown in figs. 6-10, the ignition delay may be expected to be relatively short due to the relatively narrow protrusions 21. The relatively short ignition delay is expected to result in a reduced amount of NOx gases created during combustion, but instead the soot emissions may be somewhat increased in comparison with longer ignition delays.

In a method according to an embodiment of the present invention, carried out in the internal combustion engine described with reference to fig. 1, a flow of air is provided into the combustion chamber 5 during an intake stroke of the piston 2 via the intake port 7 and the intake valve 8. During a subsequent compression stroke of the piston 2, a fuel spray 25 is injected by the fuel injector 6 toward the plurality of target positions, so that the fuel spray 25 is at each one of the target positions split by the annular ridge 20 into an upper flow portion 25a and a lower flow portion 25b. The upper flow portion 25a is deflected by at least the concave surface portion 22, 32 of the protrusion 21, 31 located above the target position, so that a swirl motion is created in the combustion chamber 5.

Fig. 10 shows rotational velocity ω as a function of distance r from the central axis C of the piston 2 at the end of injection. As can be seen, the large scale swirl motion created during fuel injection leads to large variations in the rotational velocity ω depending on the distance r from the central axis. During the post oxidation phase, the large scale swirl motion created in the combustion chamber 5 may be fractured into small scale turbulence leading to accelerated soot oxidation and thereby lower soot emissions.

The invention is of course not in any way restricted to the embodiments described above. On the contrary, many possibilities to modifications thereof will be apparent to a person with ordinary skill in the art without departing from the basic idea of the invention such as defined in the appended claims.

## Claims

1. An internal combustion engine comprising at least one cylinder (1) with a piston (2),
wherein the piston (2) has an upper end (11) and a lower end (12) between which a central axis (C) and a peripheral envelope surface (13) extend, wherein the upper end (11) comprises an annular top surface (14) defining a plane (Pᵤ) and a piston bowl (3) configured to form part of a combustion chamber (5), wherein the piston bowl (3) is recessed with respect to the annular top surface (14), and comprises:
- an annular bottom portion (15) defining a lowest level of the piston bowl (3),
- a central bottom portion (16) which is located radially inside of the annular bottom portion (15) and which is elevated with respect to the lowest level,
- an annular upper side wall portion (18) extending downward and radially inward from the top surface (14),
- an annular lower side wall portion (19) extending upward from the annular bottom portion (15) toward the annular upper side wall portion (18),
wherein the piston bowl (3) further comprises
- an annular ridge (20) formed in a transition between the annular upper side wall portion (18) and the annular lower side wall portion (19), projecting toward the central axis (C),
- a plurality of angularly spaced protrusions (31), protruding toward the central axis (C) from the annular upper side wall portion (18),
the internal combustion engine further comprising an injector (6) configured to inject and direct a fluid spray (25) toward a plurality of target positions, wherein each target position is associated with one of the angularly spaced protrusions (21, 31) and is located directly below the associated protrusion (31),
***characterised in that*** the angularly spaced protrusions are in the form of fins, each fin having a concave surface portion (32) which in the radial direction extends from the upper side wall portion (18) to a curved innermost edge of the protrusion (31),
an innermost point of the curved innermost edge being located at the level of the plane (Pu) and at a similar radial distance from the central axis (C) as the annular ridge (20),
the concave surface portion (32) being directed so that no part of the concave surface portion (32) is hidden behind any part of the protrusion (31) as seen from the central axis (C), and
each of the angularly spaced protrusions (31) extending in the axial direction from the top surface (14) to the ridge (20),
wherein the piston bowl is configured so that a fluid spray injected toward such a target position is split by the annular ridge (20) into an upper flow portion and a lower flow portion, and the upper flow portion is deflected by the concave surface portion (32) of the protrusion ( 31) located above the target position so that it contributes to creation of a swirl motion in the combustion chamber (5), whereby
the deflected upper flow portions, each deflected by the concave surface portion (32) of the protrusion (31) located above such a target position, together create said swirl motion in an upper part of the combustion chamber (5).

2. The internal combustion engine according to claim 1, wherein the concave surface portion (32) of each of the angularly spaced protrusions (31) is configured to face radially inward.

3. The internal combustion engine according to claim 1 or 2, wherein the concave surface portion (32) of each of the angularly spaced protrusions (21, 31) is configured so that at least a part of the upper flow portion is redirected toward a position above the annular ridge (20).

4. The internal combustion engine according to any one of the preceding claims, wherein the annular lower side wall portion (19) is in the form of a concave surface free from protrusions.

5. The internal combustion engine according to any one of the preceding claims, wherein each of the angularly spaced protrusions (31) further comprises a convex surface portion (34) located opposite the concave surface portion (32).

6. The internal combustion engine according to any one of the preceding claims, wherein the central bottom portion (16) has a highest point located on the central axis (C), from which highest point the central bottom portion (16) slopes downward toward the annular bottom portion (15).

7. The internal combustion engine according to any one of the preceding claims, wherein the internal combustion engine is a diesel engine and wherein the injector (6) is a fuel injector.

8. A motor vehicle comprising an internal combustion engine according to any one of claims 1-7.

9. The motor vehicle according to claim 8, wherein the motor vehicle is a heavy motor vehicle such as a truck or a bus.

10. A method for creating a swirl motion in a combustion chamber (5) of a cylinder (1) in an internal combustion engine according to any one of claims 1 to 7, comprising:
- providing a flow of air into the combustion chamber (5) during an intake stroke of the piston (2),
- during or after a compression stroke of the piston (2), injecting a fluid spray (25) toward the plurality of target positions, so that the fluid spray (25) is at each one of the target positions split by the annular ridge (20) into an upper flow portion (25a) and a lower flow portion (25b), wherein the upper flow portion (25a) is deflected by the concave surface portion (22, 32) of the protrusion (21, 31) located above the target position so that a swirl motion is created in the combustion chamber (5).

11. The method according to claim 10 in combination with claim 7, wherein injecting a fluid spray (25) comprises, following a compression stroke of the piston (2), injecting a fuel spray (25) so that when the fuel spray (25) is ignited and a flame is formed, at least an upper flow portion (25a) of the flame is deflected by the concave surface portion (32) so that a swirl motion is created in the combustion chamber (5).

## Patentansprüche

1. Verbrennungsmotor, der wenigstens einen Zylinder (1) mit einem Kolben (2) umfasst,
wobei der Kolben (2) ein oberes Ende (11) und ein unteres Ende (12) aufweist, zwischen denen sich eine Mittelachse (C) und eine periphere Mantelfläche (13) erstrecken, wobei das obere Ende (11) eine ringförmige obere Fläche (14), die eine Ebene (Pᵤ) definiert, und eine Kolbenmulde (3) umfasst, die derart ausgebildet ist, dass sie einen Teil eines Brennraums (5) bildet, wobei die Kolbenmulde (3) relativ zu der ringförmigen oberen Fläche (14) ausgespart ist und umfasst:
- einen ringförmigen Bodenabschnitt (15), der eine unterste Ebene der Kolbenmulde (3) definiert,
- einen zentralen Bodenabschnitt (16), der radial innerhalb des ringförmigen Bodenabschnitts (15) angeordnet ist und relativ zu der untersten Ebene erhöht ist,
- einen ringförmigen oberen Seitenwandabschnitt (18), der sich von der oberen Fläche (14) nach unten und radial nach innen erstreckt,
- einen ringförmigen unteren Seitenwandabschnitt (19), der sich von dem ringförmigen Bodenabschnitt (15) nach oben zu dem ringförmigen oberen Seitenwandabschnitt (18) erstreckt,
wobei die Kolbenmulde (3) ferner umfasst:
- einen ringförmigen Steg (20), der in einem Übergang zwischen dem ringförmigen oberen Seitenwandabschnitt (18) und dem ringförmigen unteren Seitenwandabschnitt (19) ausgebildet ist und in Richtung der Mittelachse (C) vorsteht,
- eine Mehrzahl winkelig beabstandeter Vorsprünge (31), die von dem ringförmigen oberen Seitenwandabschnitt (18) in Richtung der Mittelachse (C) vorstehen,
wobei der Verbrennungsmotor ferner eine Einspritzdüse (6) umfasst, die dazu eingerichtet ist, einen Fluidstrahl (25) einzuspritzen und auf eine Mehrzahl von Zielpositionen zu richten, wobei jede Zielposition einem der winkelig beabstandeten Vorsprünge (21, 31) zugeordnet ist und sich direkt unterhalb des zugehörigen Vorsprungs (31) befindet,
***dadurch gekennzeichnet, dass*** die winkelig beabstandeten Vorsprünge die Form von Flossen aufweisen, wobei jede Flosse einen Abschnitt mit einer konkaven Fläche (32) aufweist, der sich in radialer Richtung von dem oberen Seitenwandabschnitt (18) zu einem gekrümmten innersten Rand des Vorsprungs (31) erstreckt,
wobei ein innerster Punkt des gekrümmten innersten Rands auf der Höhe der Ebene (Pᵤ) und in einem ähnlichen radialen Abstand von der Mittelachse (C) angeordnet ist wie der ringförmige Steg (20),
wobei der Abschnitt mit einer konkaven Fläche (32) derart ausgerichtet ist, dass von der Mittelachse (C) aus gesehen kein Teil des Abschnitts mit einer konkaven Fläche (32) von einem Teil des Vorsprungs (31) verdeckt ist, und wobei sich jeder winkelig beabstandete Vorsprung (31) von der oberen Fläche (14) in axialer Richtung zu dem Steg (20) erstreckt,
wobei die Kolbenmulde derart ausgebildet ist, dass ein in Richtung einer solchen Zielposition eingespritzter Fluidstrahl durch den ringförmigen Steg (20) in einen oberen Teil des Stromes und einen unteren Teil des Stromes geteilt wird und der obere Teil des Stromes durch den Abschnitt mit einer konkaven Fläche (32) des oberhalb der Zielposition angeordneten Vorsprungs (31) derart abgelenkt wird, dass er zur Erzeugung einer Wirbelbewegung in dem Brennraum (5) beiträgt, wodurch
die abgelenkten oberen Teile des Stromes, die jeweils durch den Abschnitt mit einer konkaven Fläche (32) des oberhalb einer solchen Zielposition angeordneten Vorsprungs (31) abgelenkt werden, zusammen die Wirbelbewegung in einem oberen Teil des Brennraums (5) erzeugen.

2. Verbrennungsmotor nach Anspruch 1, wobei der Abschnitt mit einer konkaven Fläche (32) eines jeden winkelig beabstandeten Vorsprungs (31) derart ausgelegt ist, dass er radial nach innen weist.

3. Verbrennungsmotor nach Anspruch 1 oder 2, wobei der Abschnitt mit einer konkaven Fläche (32) eines jeden winkelig beabstandeten Vorsprungs (21, 31) derart ausgelegt ist, dass der obere Teil des Stromes wenigstens teilweise zu einer Position oberhalb des ringförmigen Stegs (20) umgeleitet wird.

4. Verbrennungsmotor nach einem der vorangehenden Ansprüche, wobei der ringförmige untere Seitenwandabschnitt (19) die Form einer konkaven Fläche ohne Vorsprünge aufweist.

5. Verbrennungsmotor nach einem der vorangehenden Ansprüche, wobei jeder winkelig beabstandete Vorsprung (31) ferner einen Abschnitt mit einer konvexen Fläche (34) umfasst, der dem Abschnitt mit einer konkaven Fläche (32) gegenüberliegt.

6. Verbrennungsmotor nach einem der vorangehenden Ansprüche, wobei der zentrale Bodenabschnitt (16) einen höchsten Punkt aufweist, der auf der Mittelachse (C) angeordnet ist, wobei der zentrale Bodenabschnitt (16) von diesem höchsten Punkt aus nach unten zu dem ringförmigen Bodenabschnitt (15) abfällt.

7. Verbrennungsmotor nach einem der vorangehenden Ansprüche, wobei es sich bei dem Verbrennungsmotor um einen Dieselmotor und bei der Einspritzdüse (6) um eine Kraftstoffeinspritzdüse handelt.

8. Kraftfahrzeug mit einem Verbrennungsmotor nach einem der Ansprüche 1-7.

9. Kraftfahrzeug nach Anspruch 8, wobei es sich bei dem Kraftfahrzeug um ein schweres Kraftfahrzeug wie einen Lastkraftwagen oder einen Bus handelt.

10. Verfahren zum Erzeugen einer Wirbelbewegung in einem Brennraum (5) eines Zylinders (1) in einem Verbrennungsmotor nach einem der Ansprüche 1 bis 7, das umfasst:
- Bereitstellen eines Luftstroms in den Brennraum (5) während eines Ansaugtakts des Kolbens (2),
- während oder nach einem Verdichtungstakt des Kolbens (2) Einspritzen eines Fluidstrahls (25) zu der Mehrzahl von Zielpositionen derart, dass der Fluidstrahl (25) an jeder Zielposition durch den ringförmigen Steg (20) in einen oberen Teil des Stromes (25a) und einen unteren Teil des Stromes (25b) geteilt wird, wobei der obere Teil des Stromes (25a) durch den Abschnitt mit einer konkaven Fläche (22, 32) des oberhalb der Zielposition angeordneten Vorsprungs (21, 31) derart abgelenkt wird, dass eine Wirbelbewegung in dem Brennraum (5) erzeugt wird.

11. Verfahren nach Anspruch 10 in Kombination mit Anspruch 7, wobei das Einspritzen eines Fluidstrahls (25) nach einem Verdichtungstakt des Kolbens (2) das Einspritzen eines Kraftstoffstrahls (25) umfasst, sodass, wenn der Kraftstoffstrahl (25) gezündet und eine Flamme gebildet wird, wenigstens ein oberer Teil des Stromes (25a) der Flamme durch den Abschnitt mit einer konkaven Fläche (32) derart abgelenkt wird, dass eine Wirbelbewegung in dem Brennraum (5) erzeugt wird.

## Revendications

1. Moteur à combustion interne comprenant au moins un cylindre (1) avec un piston (2),
dans lequel le piston (2) a une extrémité supérieure (11) et une extrémité inférieure (12) entre lesquelles s'étendent un axe central (C) et une surface d'enveloppe périphérique (13), dans lequel l'extrémité supérieure (11) comprend une surface de sommet annulaire (14) définissant un plan (Pᵤ) et une cuve de piston (3) configurée pour former une partie d'une chambre de combustion (5), dans lequel la cuve de piston (3) est en retrait par rapport à la surface de sommet annulaire (14), et comprend :
- une portion de fond annulaire (15) définissant un niveau le plus bas de la cuve de piston (3),
- une portion de fond centrale (16) qui est située radialement à l'intérieur de la portion de fond annulaire (15) et qui est élevée par rapport au niveau le plus bas,
- une portion de paroi latérale supérieure annulaire (18) s'étendant vers le bas et radialement vers l'intérieur à partir de la surface de sommet (14),
- une portion de paroi latérale inférieure annulaire (19) s'étendant vers le haut à partir de la portion de fond annulaire (15) vers la portion de paroi latérale supérieure annulaire (18),
dans lequel la cuve de piston (3) comprend en outre
- une nervure annulaire (20) formée dans une transition entre la portion de paroi latérale supérieure annulaire (18) et la portion de paroi latérale inférieure annulaire (19), faisant saillie vers l'axe central (C),
- une pluralité de saillies espacées angulairement (31), faisant saillie vers l'axe central (C) à partir de la portion de paroi latérale supérieure annulaire (18),
le moteur à combustion interne comprenant en outre un injecteur (6) configuré pour injecter et diriger une pulvérisation de fluide (25) vers une pluralité de positions cibles, dans lequel chaque position cible est associée à l'une des saillies espacées angulairement (21, 31) et est située directement en dessous de la saillie associée (31),
***caractérisé en ce que*** les saillies espacées angulairement sont sous la forme d'ailettes, chaque ailette ayant une portion de surface concave (32) qui dans la direction radiale s'étend à partir de la portion de paroi latérale supérieure (18) jusqu'à un bord incurvé le plus à l'intérieur de la saillie (31),
un point le plus à l'intérieur du bord incurvé le plus à l'intérieur étant situé au niveau du plan (Pu) et à une distance radiale de l'axe central (C) similaire à la nervure annulaire (20),
la portion de surface concave (32) étant dirigée de sorte qu'aucune partie de la portion de surface concave (32) n'est cachée derrière une partie quelconque de la saillie (31) telle que vue depuis l'axe central (C), et
chacune des saillies espacées angulairement (31) s'étendant dans la direction axiale à partir de la surface de sommet (14) jusqu'à la nervure (20),
dans lequel la cuve de piston est configurée de sorte qu'une pulvérisation de fluide injectée vers une telle position cible est divisée par la nervure annulaire (20) en une portion d'écoulement supérieure et une portion d'écoulement inférieure, et la portion d'écoulement supérieure est déviée par la portion de surface concave (32) de la saillie (31) située au-dessus de la position cible de sorte qu'elle contribue à la création d'un mouvement tourbillonnaire dans la chambre de combustion (5), moyennant quoi
les portions d'écoulement supérieures déviées, chacune déviée par la portion de surface concave (32) de la saillie (31) située au-dessus d'une telle position cible, créent ensemble ledit mouvement tourbillonnaire dans une partie supérieure de la chambre de combustion (5).

2. Moteur à combustion interne selon la revendication 1, dans lequel
la portion de surface concave (32) de chacune des saillies espacées angulairement (31) est configurée pour être tournée radialement vers l'intérieur.

3. Moteur à combustion interne selon la revendication 1 ou 2, dans lequel la portion de surface concave (32) de chacune des saillies espacées angulairement (21, 31) est configurée de telle sorte qu'au moins une partie de la portion d'écoulement supérieure est redirigée vers une position au-dessus de la nervure annulaire (20) .

4. Moteur à combustion interne selon l'une quelconque des revendications précédentes, dans lequel la portion de paroi latérale inférieure annulaire (19) est sous la forme d'une surface concave exempte de saillies.

5. Moteur à combustion interne selon l'une quelconque des revendications précédentes, dans lequel chacune des saillies espacées angulairement (31) comprend en outre une portion de surface convexe (34) située à l'opposé de la portion de surface concave (32).

6. Moteur à combustion interne selon l'une quelconque des revendications précédentes, dans lequel la portion de fond centrale (16) a un point le plus haut situé sur l'axe central (C), point le plus haut à partir duquel la portion de fond centrale (16) est inclinée vers le bas vers la portion de fond annulaire (15).

7. Moteur à combustion interne selon l'une quelconque des revendications précédentes, dans lequel le moteur à combustion interne est un moteur diesel et dans lequel l'injecteur (6) est un injecteur de carburant.

8. Véhicule à moteur comprenant un moteur à combustion interne selon l'une quelconque des revendications 1 à 7.

9. Véhicule à moteur selon la revendication 8, dans lequel le véhicule à moteur est un véhicule lourd à moteur, tel qu'un camion ou un bus.

10. Procédé de création d'un mouvement tourbillonnaire dans une chambre de combustion (5) d'un cylindre (1) dans un moteur à combustion interne selon l'une quelconque des revendications 1 à 7, comprenant :
- la fourniture d'un écoulement d'air dans la chambre de combustion (5) pendant une course d'admission du piston (2),
- pendant ou après une course de compression du piston (2), l'injection d'une pulvérisation de fluide (25) vers la pluralité de positions cibles, de sorte que la pulvérisation de fluide (25) est au niveau de chacune des positions cibles divisée par la nervure annulaire (20) en une portion d'écoulement supérieure (25a) et une portion d'écoulement inférieure (25b), dans lequel la portion d'écoulement supérieure (25a) est déviée par la portion de surface concave (22, 32) de la saillie (21, 31) située au-dessus de la position cible de sorte qu'un mouvement tourbillonnaire est créé dans la chambre de combustion (5).

11. Procédé selon la revendication 10 en combinaison avec la revendication 7, dans lequel l'injection d'une pulvérisation de fluide (25) comprend, à la suite d'une course de compression du piston (2), l'injection d'une pulvérisation de carburant (25) de sorte que lorsque la pulvérisation de carburant (25) est allumée et qu'une flamme est formée, au moins une portion d'écoulement supérieure (25a) de la flamme est déviée par la portion de surface concave (32) de sorte qu'un mouvement tourbillonnaire est créé dans la chambre de combustion (5).
